# EUROPÄISCHE PATENTSCHRIFT

(11) **EP 3 168 699 B1**
(45) Veröffentlichungstag und Bekanntmachung des Hinweises auf die Patenterteilung: **24.07.2019**
(21) Anmeldenummer: 15194352.9
(22) Anmeldetag: 12.11.2015
(51) Int. Cl.: G05B 19/042, G06F 16/9032

(54) **VERFAHREN MIT EINEM SUCHPROGRAMM UND EINEM SUCHFELD**
METHOD FOR A SEARCH PROGRAMME USING A SEARCH FIELD
PROCEDE POUR PROGRAMME DE RECHERCHE UTILISANT UN CHAMP DE RECHERCHE

(43) Veröffentlichungstag der Anmeldung: 17.05.2017
(73) Patentinhaber: SICK AG, 79183 Waldkirch (DE)
(72) Erfinder: Zeiher, Mathis, 79106 Freiburg (DE); Beha, Martin, 79211 Denzlingen (DE)

(56) Entgegenhaltungen:
- DE-A1-102008 043 198
- DE-A1-102011 053 844
- DE-A1-102011 053 951
- DE-A1-102011 101 146

## Beschreibung

Die vorliegende Erfindung betrifft ein Verfahren mit einem Suchprogramm und einem Suchfeld für ein Feldgerät gemäß dem Oberbegriff von Anspruch 1.

Insbesondere betrifft die Erfindung Feldgeräte der Prozessautomatisierung, also beispielsweise Transmitter, insbesondere O₂-Transmitter, Feldgeräte zur Rauchgasuntersuchung, wie z. B. Partikelmessgeräte, Laserscanner oder dergleichen. Derartige Feldgeräte verfügen häufig über eine Webanwendung, über welche das Feldgerät konfigurierbar bzw. parametrierbar ist.

Eine Komplexität von derartigen Feldgeräten nimmt stetig zu. Dies hat unter anderem eine starke Auswirkung auf die Anzahl der verfügbaren Parameter und Prozessdaten. Das Auffinden von Parametern und/oder Prozessdaten, deren Werte sowie deren Eigenschaften erweisen sich für einen ungeschulten Bediener als schwierig bzw. unmöglich. Üblicherweise sind die Parameter und/oder Prozessdaten auf unterschiedlichen Seiten und in unterschiedlichen Menüebenen einer Bedienoberfläche verteilt.

Die DE 10 2008 043 198 A1 offenbart ein Feldgerät mit einer Indexdatei zum Suchen von Parametern des Feldgerätes.

Die DE 10 2011 101 146 A1 offenbart ein Verfahren und eine Einrichtung zum mehrstufigen Auffinden von Gerätedaten eines Feldgeräts eines Automatisierungssystems aufgrund einer Datenbankdatei.

Die DE 10 2011 053 951 A1 offenbart ein Verfahren, um auf Prozessdaten eines Feldgeräts zuzugreifen, wobei eine Datenbank nach einer Deskriptordatei durchsucht wird.

Die DE 10 2011 053 844 A1 offenbart einen Suchdienst an einem Prozessleitsystem.

Speziell eine Verwendung von vorgenerierten Indexdateien und Datenbanken erweist sich in der Praxis als unflexibel.

Eine Aufgabe der Erfindung besteht darin, das Auffinden von Parametern und/oder Prozessdaten zu vereinfachen.

Die Aufgabe wird gemäß Anspruch 1 gelöst.

Die Erfindung ermöglicht das Auffinden von Parametern und/oder Prozessdaten sowie deren Inhalt und Eigenschaften in durch eine Webanwendung dynamisch generierten bzw. dynamisch erzeugten Seiten bzw. in einer dynamisch erzeugten Menüstruktur der Bedienoberfläche. Zur Suche werden die Parameter und/oder Prozessdaten ebenfalls zur Laufzeit dynamisch aus der Bedienoberfläche von der Webanwendung erzeugt.

Eine dynamische Erzeugung bedeutet, dass die Erzeugung während der Ausführung, also während der Laufzeit der Webanwendung erfolgt. Daher brauchen nicht vor der Ausführung der Webanwendung zusätzliche Dateien erzeugt werden.

Anhand des eingegebenen Suchkriteriums wird die aktuell dynamisch erzeugte Bedienoberfläche durchsucht.

Das einfache Auffinden von Parametern oder Prozessdaten sowie deren Werte und Eigenschaften in dynamisch generierten bzw. erzeugten Seiten bzw. Menüstrukturen wird gemäß der vorliegenden Erfindung vereinfacht, da gemäß der Erfindung keine Indexdatei oder Suchdatenbank erzeugt werden muss.

Die Suche wird zu einem Suchzeitpunkt anhand der aktuellen Bedienoberfläche durchgeführt. Somit können dynamisch vom Feldgerät erzeugte Daten und deren Eigenschaften ebenfalls gefunden werden.

Die Suche ist ohne jegliche Installation von Plug-Ins in einem Standardbrowser möglich. Dadurch kann die Suche bei jedem Standardbrowser durchgeführt werden, wodurch der Anwender frei ist bei der Auswahl des Browsers. Die Suche ist zudem ein Teil der Webanwendung und nicht des Browsers, weshalb ein Standardbrowser eingesetzt werden kann.

Auch das Vorhandensein eines Webservers, der eine Suche durchführt, ist nicht notwendig. Die Suche wird nur clientseitig also auf Anwendungsseite durchgeführt, nämlich beispielsweise auf dem Rechner bzw. Personalcomputer, auf dem der Browser mit der Webanwendung ausgeführt wird.

Weiter wird sowohl im Client bzw. im Rechner bzw. Personalcomputer, auf dem die Webanwendung bzw. der Standardbrowser ausgeführt wird, als auch im Feldgerät kein Speicherplatz für eine Datenbank oder eine Indexdatei benötigt. Die Suche ist somit optional unabhängig vom Feldgerät. Das Feldgerät selbst, also beispielsweise der Prozessor, der Speicher oder die Kommunikationsmittel des Feldgerätes, werden mit der Suche nicht zusätzlich belastet.

Gemäß der Erfindung weist die Datenstruktur Inhalte einer Applikationsbeschreibungsdatei auf. Eine Applikationsbeschreibungsdatei, beispielsweise eine Datei im XML-Format, enthält Metadaten zur eigentlichen Bedienoberfläche bzw. zum Anwendungsprogramm. Mit der Applikationsbeschreibungsdatei wird beispielsweise die grafische Bedienoberfläche an sich definiert und deren Inhalte definiert.

Die Bedienoberfläche liegt dabei in Form einer durchsuchbaren Datenstruktur vor. Die Datenstruktur kann dabei ebenfalls im XML-Format vorliegen.

Die Webanwendung erzeugt die Parameter und/oder Prozessdaten bzw. Parameter und/oder Prozessdatenseiten dynamisch zur Laufzeit aus der Applikationsbeschreibungsdatei.

In Weiterbildung weist die Datenstruktur dynamische Werte mit Eigenschaften des Feldgerätes auf.

Die Suche ist somit auch in der Lage, Kombinationen aus Eigenschaften und aktuellen und veränderlichen, also dynamischen Prozessdaten zu finden. Beispielsweise können alle Parameter außerhalb einer Spezifikation oder alle Parameter unterhalb eines bestimmten Wertes gesucht und gefunden werden.

Gemäß einer bevorzugten Ausführungsform der Erfindung werden bei einer Eingabe von Parametern oder Prozessdaten in das Suchfeld Vorschläge mittels einer Autovervollständigung angezeigt.

Je nach Autovervollständigung muss das Suchkriterium nicht vollständig vom Benutzer eingegeben werden. Beispielsweise muss nur eine bestimmte Anzahl der Buchstaben- bzw. Zeichen- und/oder Zahlenfolgen eingegeben werden. Daraufhin werden alle Parameter und/oder Prozessdaten angezeigt, welche die Buchstaben-, Zeichen, oder Zahlenfolgen aufweisen. Beispielsweise kann die Autovervollständigung nur für gültige Anfangszeichen wie beispielsweise Buchstaben, Zeichen oder Zahlen erfolgen. Demnach wird nur geprüft, ob der gesuchte Parameter und/oder die Prozessdaten mit einer Anfangsfolge übereinstimmt und es werden nur die möglichen Parameter und/oder Prozessdaten angezeigt, die mit dieser Anfangsfolge übereinstimmen.

Gemäß einer besonders bevorzugten Ausführungsform der Erfindung werden die im Suchfeld angezeigten Parameter und/oder Prozessdaten direkt angeklickt und daraufhin erfolgt ein direkter Sprung auf die entsprechende Parameterseite bzw. Prozessdatenseite. Dadurch kann eine besonders effiziente und schnelle Selektion des gewünschten Parameters bzw. der gewünschten Prozessdaten erfolgen. Dadurch braucht auch lediglich das Suchfeld bereitgestellt werden und kein zusätzliches weiteres Auswahlfeld. Optional weist das Suchfeld lediglich mehrere Zeilen auf, die ähnlich einem Pulldown-Menü automatisch erscheinen, wenn mehrere Parameter aufgrund der Suchanfrage in Frage kommen.

In Weiterbildung der Erfindung wird eine Zusammenfassungsseite erzeugt, auf welcher alle Parameter bzw. Prozessdaten angezeigt werden, welche dem Suchkriterium entsprechen. Lediglich wenn eine Vielzahl von Parametern bzw. Prozessdaten aufgrund des Suchergebnisses in Frage kommen, wird eine Zusammenfassungsseite erzeugt. Dies ist beispielsweise dann vorteilhaft, wenn viele Parameter bzw. Prozessdaten sehr ähnliche Bezeichnungen aufweisen, wie beispielsweise Standardbezeichnungen, wie zum Beispiel "Temperatur_Behälter_01", "Temperatur_Behälter_02" usw.

In Weiterbildung der Erfindung wird das Suchkriterium auf Basis einer semantischen Suche mit Hilfe einer domainspezifischen Sprache gesteuert.

Eine semantische Suche ist eine Suchmethode, in der die Bedeutung der Suchanfrage in den Mittelpunkt gestellt wird. Durch die Verwendung von Hintergrundwissen wird bei einer semantischen Suchmaschine die inhaltliche Bedeutung von Texten und Suchanfragen berücksichtigt. Es wird nicht nur nach Wörtern, Buchstaben, Zeichen und/oder Zahlen im Text gesucht. Dadurch kann eine Suchanfrage präziser erfasst und mit den inhaltlich relevanten Texten in Verbindung gebracht werden. Somit werden inhaltlich korrekte Suchergebnisse bereitgestellt.

Eine domainspezifische Sprache ist dabei eine sehr spezielle bzw. spezialisierte anwendungsspezifische Programmiersprache im Gegensatz zu einer universell einsetzbaren Programmiersprache wie beispielsweise C oder Java.

Weiter können auch vordefinierte Suchkriterien verwendet werden. Hierbei werden dem Benutzer bereits, ohne dass er eine Eingabe im Suchfeld eingegeben hat, bestimmte Parameter bzw. Prozessdaten zur Suche vorgeschlagen. Das hat den Vorteil, dass der Anwender durch die vordefinierten Suchkriterien bereits einen Anhaltspunkt bekommt, welche Syntax bzw. welche Namensdefinitionen die Parameter bzw. die Prozessdaten aufweisen.

In Weiterbildung wird die Suche nach Parametern bzw. Prozessdatenwerten auf dem Feldgerät durchgeführt, wobei das Suchkriterium an das Feldgerät übergeben und im Feldgerät ausgewertet wird. Dadurch wird lediglich ein Eingabegerät bzw. ein Eingabe/Anzeigegeräte benötigt, um die Suchanfrage eingeben zu können und um das Suchergebnis anzeigen zu können. Die Suche selbst läuft jedoch auf dem eh vorhandenen Feldgerät ab.

Gemäß einer Weiterbildung wird das Suchprogramm in einer Programmiersprache für grafische Benutzeroberflächen erstellt. Bei der Programmiersprache kann es sich beispielsweise um Java oder C# und optional zugehörige Entwicklungstools handeln.

Die Erfindung wird nachstehend auch hinsichtlich weiterer Vorteile und Merkmale unter Bezugnahme auf die beigefügte Zeichnung anhand von Ausführungsbeispielen erläutert. Die Figur der Zeichnung zeigt in:

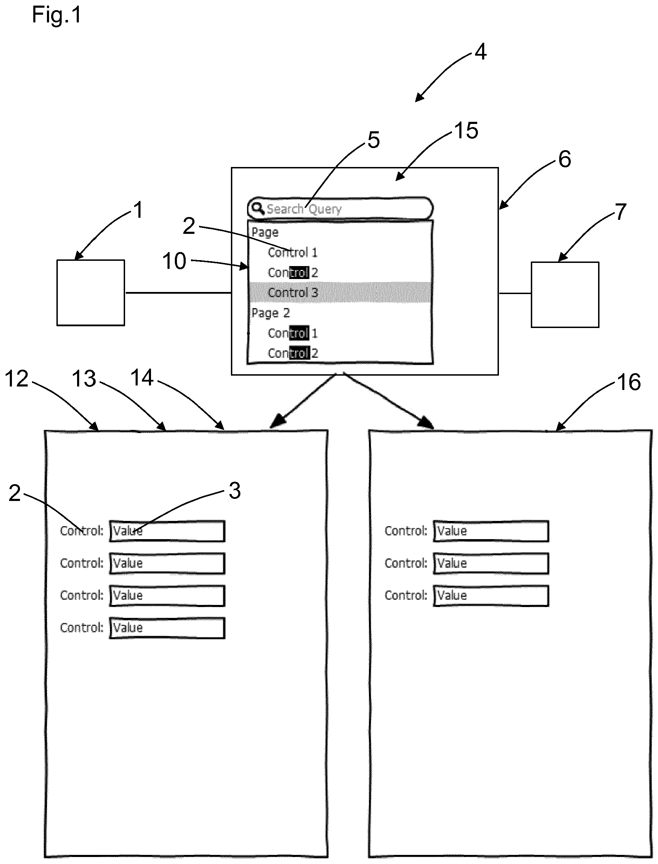

- Figur 1: ein Verfahren mit einem Suchprogramm und einem Suchfeld zum Suchen und Auffinden von Parametern und/oder Prozessdaten für ein Feldgerät.

In der nachfolgenden Figur sind identische Teile mit identischen Bezugszeichen versehen.

Figur 1 zeigt ein Verfahren mit einem Suchprogramm 15 und einem Suchfeld 5 zum Suchen und Auffinden von Parametern 2 und/oder Prozessdaten 3 in einer Webanwendung 4, welche zur Bedienung und Visualisierung mindestens eines Feldgerätes 1 vorgesehen ist, wobei die Webanwendung 4 die Parameter 2 und/oder Prozessdaten 3 dynamisch zur Laufzeit aus einer Bedienoberfläche 6 erzeugt, wobei die Bedienoberfläche 6 mindestens eine durchsuchbare Datenstruktur 7 aufweist.

Anhand des eingegebenen Suchkriteriums wird die aktuell dynamisch erzeugte Bedienoberfläche 6 durchsucht.

Die Suche wird zu einem Suchzeitpunkt anhand der aktuellen Bedienoberfläche 6 durchgeführt. Damit können dynamisch vom Feldgerät 1 erzeugte Daten und deren Eigenschaften ebenfalls gefunden werden.

Die Suche kann mit nahezu jedem Standardbrowser durchgeführt werden. Die Suche ist Teil der Webanwendung 4 und nicht des Browsers.

Die Suche wird nur clientseitig also auf Anwendungsseite durchgeführt, nämlich beispielsweise auf dem Rechner bzw. Personalcomputer auf dem der Browser mit der Webanwendung 4 ausgeführt wird.

Die Datenstruktur weist Inhalte einer Applikationsbeschreibungsdatei auf. Eine Applikationsbeschreibungsdatei, beispielsweise eine Datei im XML-Format, enthält Metadaten zur eigentlichen Bedienoberfläche 6 bzw. zum Anwendungsprogramm. Mit der Applikationsbeschreibungsdatei wird beispielsweise die grafische Bedienoberfläche 6 an sich definiert und deren Inhalte definiert.

Die Bedienoberfläche 6 liegt dabei in Form einer durchsuchbaren Datenstruktur 7 vor. Die Datenstruktur 7 kann dabei ebenfalls im XML-Format vorliegen.

Die Webanwendung erzeugt die Parameter 2 und/oder Prozessdaten 3 bzw. Parameter und/oder Prozessdatenseiten dynamisch zur Laufzeit aus der Applikationsbeschreibungsdatei.

Gemäß Figur 1 weist die Datenstruktur 7 dynamische Werte mit Eigenschaften des Feldgerätes 1 auf.

Die Suche ist somit auch in der Lage, Kombinationen aus Eigenschaften und aktuellen und veränderlichen, also dynamischen Prozessdaten 3 zu finden. Beispielsweise können alle Parameter außerhalb einer Spezifikation oder alle Parameter unterhalb eines bestimmten Wertes gesucht und gefunden werden.

Gemäß Figur 1 werden bei einer Eingabe von Parametern 2 und/oder Prozessdaten 3 in das Suchfeld Vorschläge mittels einer Autovervollständigung angezeigt.

Je nach Autovervollständigung 10 muss das Suchkriterium nicht vollständig vom Benutzer eingegeben werden. Beispielsweise muss nur eine bestimmte Anzahl der Buchstaben- bzw. Zeichen- und/oder Zahlenfolgen eingegeben werden. Daraufhin werden alle Parameter 2 und/oder Prozessdaten 3 angezeigt, welche die Buchstaben-, Zeichen, oder Zahlenfolgen aufweisen. Beispielsweise kann die Autovervollständigung nur für gültige Anfangszeichen wie beispielsweise Buchstaben, Zeichen oder Zahlen erfolgen. Demnach wird nur geprüft, ob der gesuchte Parameter 2 und/oder die Prozessdaten 3 mit einer Anfangsfolge übereinstimmt und es werden nur die möglichen Parameter 2 und/oder Prozessdaten 3 angezeigt, die mit dieser Anfangsfolge übereinstimmen. Gemäß Figur 1 könnte beispielsweise die Zeichenfolge 'trol' eingegeben werden. Dabei werden die Parameter 'Control 1', Control 2' usw. angezeigt und die gesuchte Zeichenfolge 'trol' wird in dem Suchergebnis hervorgehoben.

Gemäß Figur 1 können die im Suchfeld angezeigten Parameter und/oder Prozessdaten direkt angeklickt werden und daraufhin erfolgt ein direkter Sprung auf die entsprechende Parameterseite 12 bzw. Prozessdatenseite 13. Optional weist das Suchfeld 5 mehrere Zeilen auf, die ähnlich einem Pulldown-Menü automatisch erscheinen, wenn mehrere Parameter 2 aufgrund der Suchanfrage in Frage kommen.

Gemäß Figur X wird eine Zusammenfassungsseite 14 erzeugt, auf welcher alle Parameter 2 bzw. Prozessdaten 3 angezeigt werden, welche dem Suchkriterium entsprechen. Lediglich wenn eine Vielzahl von Parametern 2 bzw. Prozessdaten 3 aufgrund des Suchergebnisses in Frage kommen, wird eine Zusammenfassungsseite 14 erzeugt. Weiter kann auch eine Geräteseite 16 angezeigt werden, welche lediglich die Parameter 2 und/oder Prozessdaten 3 des Feldgerätes 1 anzeigt.

Gemäß Figur 1 wird das Suchkriterium auf Basis einer semantischen Suche mit Hilfe einer domainspezifischen Sprache gesteuert.

Weiter können auch vordefinierte Suchkriterien verwendet werden. Hierbei werden dem Benutzer bereits, ohne dass er eine Eingabe im Suchfeld 5 eingegeben hat, bestimmte Parameter 2 bzw. Prozessdaten 3 zur Suche vorgeschlagen werden.

Gemäß Figur 1 wird die Suche nach Parametern 2 bzw. Prozessdaten 3 optional auf dem Feldgerät 1 durchgeführt, wobei das Suchkriterium an das Feldgerät 1 übergeben und im Feldgerät 1 in einer Auswerteeinheit ausgewertet wird. Dadurch wird lediglich ein Eingabegerät bzw. ein Eingabe/Anzeigegeräte benötigt, um die Suchanfrage eingeben zu können und um das Suchergebnis anzeigen zu können. Die Suche selbst läuft jedoch auf dem eh vorhandenen Feldgerät 1 ab.

Gemäß Figur 1 ist das Suchprogramm 15 in einer Programmiersprache für grafische Benutzeroberflächen erstellt. Bei der Programmiersprache kann es sich beispielsweise um Java oder C# und optional zugehörige Entwicklungstools handeln.

### Bezugszeichen:

1 Feldgerät
2 Parameter
3 Prozessdaten
4 Webanwendung
5 Suchfeld
6 Bedienoberfläche
7 Datenstruktur
10 Autovervollständigung
12 Parameterseite
13 Prozessdatenseite
14 Zusammenfassungsseite
15 Suchprogramm
16 Geräteseite

## Patentansprüche

1. Verfahren zum Suchen und Auffinden von Parametern (2) und/oder Prozessdaten (3) in einer Webanwendung (4), wobei die Webanwendung (4) ein Suchprogramm (5) aufweist, welches Suchprogramm (5) ein Suchfeld (15) aufweist, wobei die Webanwendung zur Bedienung und Visualisierung mindestens eines Feldgerätes (1) vorgesehen ist,
**dadurch gekennzeichnet, dass**
die Webanwendung (4) zur Suche die Parameter (2) und/oder Prozessdaten (3) dynamisch zur Laufzeit aus einer Bedienoberfläche (6) erzeugt, wobei die Bedienoberfläche (6) mindestens eine durchsuchbare Datenstruktur (7) aufweist, wobei die Datenstruktur (7) Inhalte einer Applikationsbeschreibungsdatei aufweist, wobei die Bedienoberfläche im XML-Format vorliegt, wobei die Suche ein Teil der Webanwendung ist, wobei die Suche nur clientseitig auf Anwendungsseite durchgeführt wird, nämlich auf dem Rechner oder dem Personalcomputer, auf dem der Browser mit der Webanwendung (4) ausgeführt wird, wobei keine Indexdatei oder Suchdatenbank erzeugt wird und vor der Ausführung der Webanwendung keine zusätzlichen Dateien erzeugt werden, wobei die im Suchfeld (5) angezeigten Parameter (2) und/oder Prozessdaten (3) direkt angeklickt werden und daraufhin ein direkter Sprung auf die entsprechende Parameterseite (12) oder Prozessdatenseite (13) erfolgt.

2. Verfahren nach Anspruch 1, **dadurch gekennzeichnet, dass** die Datenstruktur (7) dynamische Werte mit Eigenschaften des Feldgerätes (1) aufweist.

3. Verfahren nach mindestens einem der vorhergehenden Ansprüche, **dadurch gekennzeichnet, dass** bei einer Eingabe von Parametern (2) und/oder Prozessdaten (3) in das Suchfeld (5) Vorschläge mittels einer Autovervollständigungsfunktion (10) angezeigt werden.

4. Verfahren nach mindestens einem der vorhergehenden Ansprüche, **dadurch gekennzeichnet, dass** eine Zusammenfassungsseite (14) erzeugt wird, auf welcher alle Parameter (2) bzw. Prozessdaten (3) angezeigt werden, welche dem Suchkriterium entsprechen.

5. Verfahren nach mindestens einem der vorhergehenden Ansprüche, **dadurch gekennzeichnet, dass** das Suchkriterium auf Basis einer semantischen Suche mit Hilfe einer domainspezifischen Sprache gesteuert wird.

6. Verfahren nach mindestens einem der vorhergehenden Ansprüche, **dadurch gekennzeichnet, dass** das Suchprogramm in einer Programmiersprache für grafische Bedienoberfläche (6) erstellt wird.

## Claims

1. A method for searching and locating parameters (2) and/or process data (3) in a web application (4), wherein the web application (4) has a search program (5), said search program (5) having a search box (15), and wherein the web application is provided for operating and visualizing at least one field instrument (1),
**characterized in that**
the web application (4) for the search dynamically produces the parameters (2) and/or process data (3) from an operating interface (6) at the running time, with the operating interface (6) having at least one searchable data structure (7), with the data structure (7) having contents of an application description file, with the operating interface being present in the XML format, with the search being part of the web application, with the search only being carried out at the client side on the application side, that is on the computer or personal computer on which the browser with the web application (4) is executed, with no index file or search database being generated, and with the parameters (2) and/or process data (3) displayed in the search box (5) being clicked directly and a direct jump thereupon taking place to the corresponding parameter page (12) and/or process data page (13).

2. A method in accordance with claim 1, **characterized in that** the data structure (7) has dynamic values having properties of the field instrument (1).

3. A method in accordance with at least one of the preceding claims, **characterized in that**, on an input of parameters (2) and/or process data (3) into the search box (5), suggestions are displayed by means of an autocomplete function (10).

4. A method in accordance with at least one of the preceding claims, **characterized in that** a summary page (14) is produced on which all the parameters (2) and/or process data (3) are displayed which correspond to the search criterion.

5. A method in accordance with at least one of the preceding claims, **characterized in that** the search criterion is controlled on the basis of a semantic search with the aid of a domain-specific language.

6. A method in accordance with at least one of the preceding claims, **characterized in that** the search program is prepared in a programming language for a graphical operating interface (6).

## Revendications

1. Procédé pour rechercher et trouver des paramètres (2) et/ou des données de processus (3) dans une application Web (4), l'application Web (4) présentant un programme de recherche (5), ledit programme de recherche (5) présentant un champ de recherche (15), l'application Web étant prévue pour contrôler et visualiser au moins un appareil de terrain (1),
**caractérisé en ce que**
pour la recherche, l'application Web (4) génère les paramètres (2) et/ou les données de processus (3) à partir d'une interface utilisateur (6) de façon dynamique par rapport au temps de fonctionnement, l'interface utilisateur (6) ayant au moins une structure de données interrogeable (7), la structure de données (7) comprenant des contenus d'un fichier de description d'application, l'interface utilisateur étant au format XML, la recherche faisant partie de l'application Web, la recherche étant effectuée uniquement côté client côté application, à savoir sur l'ordinateur ou l'ordinateur personnel sur lequel le navigateur est exécuté avec l'application Web (4), aucun fichier index ni base de données de recherche n'étant créé, et aucun fichier supplémentaire n'étant généré avant l'exécution de l'application Web, et dans le champ de recherche (5), les paramètres (2) et/ou les données de processus (3) affichés sont cliqués directement, suite à quoi il s'effectue un saut direct sur la page de paramètres (12) ou sur la page de données de processus (13) correspondante.

2. Procédé selon la revendication 1, **caractérisé en ce que** la structure de données (7) présente des valeurs dynamiques ayant des propriétés de l'appareil de terrain (1).

3. Procédé selon l'une au moins des revendications précédentes, **caractérisé en ce que** lors de l'entrée de paramètres (2) et/ou de données de processus (3) dans le champ de recherche (5), des suggestions sont affichées à l'aide d'une fonction d'auto-complétion (10).

4. Procédé selon l'une au moins des revendications précédentes, **caractérisé en ce que** une page récapitulative (14) est générée, sur laquelle tous les paramètres (2) ou toutes les données de processus (3) qui correspondent au critère de recherche sont affiché(e)s.

5. Procédé selon l'une au moins des revendications précédentes, **caractérisé en ce que** le critère de recherche est commandé sur la base d'une recherche sémantique à l'aide d'un langage spécifique au domaine.

6. Procédé selon l'une au moins des revendications précédentes, **caractérisé en ce que** le programme de recherche est créé dans un langage de programmation pour une surface utilisateur (6) graphique.
